# EUROPÄISCHE PATENTANMELDUNG

(11) **EP 1 614 858 A1**
(43) Veröffentlichungstag der Anmeldung: **11.01.2006**
(21) Anmeldenummer: 04016249.7
(22) Anmeldetag: 09.07.2004
(51) Int. Cl.: F01D 5/08, F02C 7/18, F01D 25/12, F01D 21/00

(54) **Verfahren und Vorrichtung zur Überwachung des Kühlluftsystems einer Turbine**

(71) Anmelder: SIEMENS AKTIENGESELLSCHAFT, 80333 München (DE)
(72) Erfinder: Lüttenberg, Andreas, 45289 Essen (DE)

(57) **Zusammenfassung**

Verfahren und Vorrichtung (1) zur Überwachung des Kühlluftsystems (3) einer Turbine (5), wobei mindestens einer Schaufelreihe (7) der Turbine (5) Kühlluft (9) zugeführt wird.

Bei einem erfindungsgemäßen Verfahren und eine Vorrichtung (1) ist die Ermittlung eines Luftdrucks in mindestens einem Kühlluft-Sammelraum (11) vorgesehen, wobei aus dem Kühlluft-Sammelraum (11) die Kühlluft (9) entnommen und der Schaufelreihe (7) zugeführt wird. Bevorzugt wird der mittels eines Drucksensors (13) aufgenommene Luftdruck drahtlos an eine Auswerteeinheit (23) übertragen.

## Beschreibung

Die Erfindung betrifft ein Verfahren und eine Vorrichtung zur Überwachung des Kühlsystems einer Turbine, wobei mindestens einer Schaufelreihe der Turbine Kühlluft zugeführt wird.

Bei Gasturbinen werden die Turbinenschaufeln mit einem sehr heißen Antriebsgas beaufschlagt, welches in einer Brennkammer erzeugt wird.

Um eine Beschädigung der Turbinenschaufeln zu vermeiden, ist meist ein Kühlluftsystem vorgesehen, mittels welchem Kühlluft zur Kühlung der Turbinenschaufeln in das Innere der Turbinenschaufeln eingeleitet wird.

Die Turbinenschaufeln sind daher meist als Hohlkörper ausgebildet, der eine Anzahl an Kühlluftkanälen aufweist, um die Kühlluft im Inneren der Turbinenschaufel gezielt zu leiten.

Dabei wird ein Kühlluftstrom beispielsweise innerhalb der Turbinenschaufel mehrmals umgelenkt und tritt an Kühlluftauslassöffnungen aus der Turbinenschaufel aus.

Die Kühlluftkanäle und/oder die Kühllufteinlass- und/oder Kühlluftauslassöffnungen der Turbinenschaufeln weisen meist kleine Durchmesser auf, so dass sie infolge von Verunreinigungen in der Kühlluft zu Verstopfungen neigen.

Verstopfte Kühlluftöffnungen und/oder Kühlluftkanäle der Turbinenschaufel sind in vielen Fällen die Ursache für Überhitzungen der Turbinenschaufel, insbesondere im Bereich der Kühlluftaustrittsöffnungen.

Durch derartige Überhitzungen kann die Turbinenschaufel zerstört werden, insbesondere deren hitzefeste Keramikbeschichtung.

Um derartige Schäden zu vermeiden, ist es bekannt, bei einer Turbine Wartungszyklen vorzusehen, bei welchen in der Regel eine zumindest teilweise Demontage erforderlich ist, um durch Sichtprüfung sich anbahnende oder bereits eingetretene Beschädigungen an Turbinenschaufeln feststellen zu können.

Derartige bekannte Verfahren sind sehr aufwendig, da hierfür die Turbine außer Betrieb genommen werden muss, was zu Produktionsausfällen führt. Darüber hinaus sind die Wartungsmaßnahmen selbst sehr aufwendig, insbesondere wegen der meist erforderlichen zumindest teilweisen Demontage der Turbine.

Des Weiteren können derartige Wartungsmaßnahmen offenbaren, dass überhaupt keine Beschädigung vorliegt und die Maßnahme daher nicht erforderlich war oder dass bereits eine weit fortgeschrittene Schädigung vorliegt, deren Ausmaß bei einer früheren Erkennung des Schadens hätte verhindert werden können.

Der Erfindung liegt daher die Aufgabe zugrunde, ein verbessertes Verfahren sowie eine Vorrichtung zur Überwachung des Kühlluftsystems einer Turbine anzugeben, wobei mindestens einer Schaufelreihe der Turbine Kühlluft zugeführt wird.

Die Aufgabe wird erfindungsgemäß gelöst durch ein gattungsgemäßes Verfahren, wobei ein Luftdruck in mindestens einem Kühlluft-Sammelraum ermittelt wird, aus welchem die Kühlluft entnommen und der Schaufelreihe zugeführt wird.

Dadurch ist es möglich, Verstopfungen von Kühllufteintritts-öffnungen und/oder Kühlluftaustrittsöffnungen und/oder Kühlluftkanälen frühzeitig zu erkennen, was zu einer Vermeidung von Beschädigungen der Turbinenbeschaufelung beiträgt.

Der Luftdruck im Kühlluft-Sammelraum ist ein Maß dafür, inwieweit der Kühlluftdurchfluss durch die Turbinenschaufeln ggf. bereits gestört ist.

In einer Ausführungsform ist der Kühlluft-Sammelraum in einem Turbinengehäuse der Turbine angeordnet. Besonders bevorzugt ist dieser ringförmig um eine Turbinenachse angeordnet.

Durch eine derartige rotationssymmetrische Ausbildung des Kühlluft-Sammelraums ist eine gleichmäßige Kühlung der ebenfalls rotationssymmetrisch angeordneten Turbinenschaufeln möglich.

In einer besonders bevorzugten Ausführungsform wird der Kühlluft-Sammelraum mit verdichteter Luft aus einem Verdichter gespeist und er kommuniziert direkt mit der Turbinenschaufelreihe über einen Kühlluftkanal.

Bei dieser Ausführungsform ist der Kühlluft-Sammelraum sehr nahe bei der zu kühlenden Schaufelreihe angeordnet, was zu einer effizienten Kühlung mit wenig Druckverlusten des Kühlluftstroms führt.

Der Luftdruck wird bevorzugt mittels mindestens eines Drucksensors ermittelt, welcher im Kühlluft-Sammelraum angeordnet ist.

Besonders bevorzugt geschieht die Übermittelung eines aktuellen Werts des Luftdrucks drahtlos an eine Auswerteeinheit.

In einer weiteren bevorzugten Ausführungsform wird aufgrund eines ansteigenden Luftdrucks im Kühlluft-Sammelraum auf eine Verstopfung mindestens einer von mindestens einer Turbinenschaufel umfassten Kühllufteintritts- oder/und Kühlluftaustrittsöffnung oder/und eines Turbinenschaufelkühlluftkanals oder/und dessen Kühlluftkanals geschlossen.

Eine Verstopfung eines der genannten Mittel führt durch Rückstau der zugeführten Kühlluft zu einem Ansteigen des Luftdrucks; dies ist ein deutliches Indiz für eine vorliegende Verstopfung.

Bezüglich der Vorrichtung wird die Aufgabe erfindungsgemäß gelöst durch eine Vorrichtung zur Überwachung des Kühlluftsystems einer Turbine, wobei mindestens einer Schaufelreihe der Turbine Kühlluft zuführbar ist, mit mindestens einem in einem Kühlluft-Sammelraum angeordneten Drucksensor, wobei aus dem Kühlluft-Sammelraum die Kühlluft entnehmbar und der Schaufelreihe zuführbar ist.

Bevorzugt ist der Kühlluft-Sammelraum in einem Turbinengehäuse der Turbine angeordnet.

Der Kühlluft-Sammelraum ist in einer Ausführungsform ringförmig um eine Turbinenachse angeordnet.

Besonders bevorzugt umfasst die Vorrichtung weiterhin einen Verdichter zur Speisung des Kühlluft-Sammelraums mit verdichteter Luft, wobei der Kühlluft-Sammelraum über einen Kühlluftkanal direkt mit der Turbinenschaufelreihe kommuniziert.

Besonders vorteilhaft ist der Drucksensor zur drahtlosen Übertragung eines aktuellen Luftdrucks an eine Auswerteeinheit ertüchtigt.

Im Folgenden wird ein Ausführungsbeispiel der Erfindung näher dargestellt.

Es zeigt:

FIG eine erfindungsgemäße Vorrichtung zur Überwachung des Kühlsystems einer Turbine.

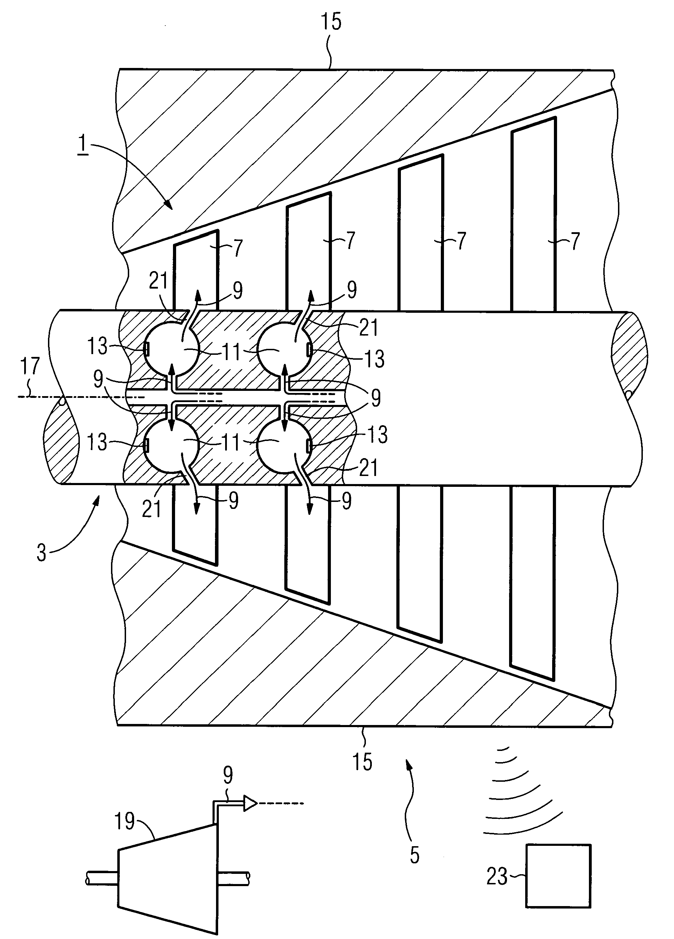

In der Figur ist eine erfindungsgemäße Vorrichtung 1 dargestellt, mittels welcher ein Kühlluftsystem 3 einer Turbine 5 überwachbar ist.

Die Turbine 5 umfasst im vorliegenden Ausführungsbeispiel vier Turbinenschaufelreihen 7, welche als Laufschaufeln ausgebildet sind. Die üblicherweise in Heißgasströmungsrichtung vor jeder Laufschaufelreihe angeordnete Leitschaufelreihe ist im Ausführungsbeispiel nicht dargestellt.

Im Zusammenhang mit der vorliegenden Erfindung kann das Kühlluftsystem 3 ebenfalls ergänzend zur Kühlung der Leitschaufelreihen vorgesehen sein.

Die am stärksten temperaturbeanspruchten Schaufelreihen 7 sind die dem heißen Antriebsgas in Heißgasrichtung am nächsten gelegenen Schaufelreihen.

Daher ist beim vorliegenden Ausführungsbeispiel das Kühlluftsystem 3 zur Kühlung der ersten beiden Schaufelreihen 7 ausgelegt. Es ist jedoch ebenso denkbar, dass das Kühlsystem 3 nur für eine der Schaufelreihen 7, insbesondere für die erste, oder auch für mehrere oder alle Schaufelreihen 7 ausgelegt ist.

Die Turbinenschaufeln der Schaufelreihen 7 sind als Hohlkörper ausgelegt, in welche Kühlluft 9 eingeleitet wird.

Dazu weisen die Turbinenschaufeln im Inneren üblicherweise eine Anzahl an Turbinenschaufelkühlluftkanälen auf, in welchen die Kühlluft 9 geführt wird. Des Weiteren umfassen die Turbinenschaufeln Kühllufteintritts- und Kühlluftaustrittsöffnungen.

Die genannten Details bezüglich der Kühlluftführung in den Turbinenschaufeln sind in der Figur nicht näher dargestellt.

Die Kühlluft 9 wird von einem Verdichter 19 bereitgestellt, welcher Kühlluft-Sammelräume 11 mit verdichteter Luft als Kühlluft 9 speist.

Die Kühlluft-Sammelräume 11 sind rotationssymmetrisch und ringförmig um eine Turbinenachse 17 und innerhalb eines Turbinengehäuses 15 angeordnet.

Zur Ermittlung des Luftdrucks in den Kühlluft-Sammelräumen 11 ist jeweils mindestens ein Drucksensor 13 vorgesehen, welcher, bevorzugt drahtlos, mit einer Auswerteeinheit 23 verbunden ist.

Die in den Kühlluft-Sammelräumen 11 bereitgestellte Kühlluft 9 für die Schaufelreihen 7 wird über Kühlluftkanäle 21 in die Turbinenschaufelreihen 7 geleitet.

Eine Verstopfung der Kühlluftkanäle 21 oder/und von Kühllufteintrittsöffnungen der Turbinenschaufeln oder/und von Kühlluftaustrittsöffnungen der Turbinenschaufeln oder/und von Turbinenschaufelkühlluftkanälen wird mittels des Drucksensors 13 detektiert, da eine derartige Verstopfung zu einem Rückstau an Kühlluft 9 in mindestens einem Kühlluft-Sammelraum 11 führt, was sich wiederum in einem ansteigenden Luftdruck im jeweiligen Kühlluft-Sammelraum 11 niederschlägt.

Die Auswerteeinheit 23 ist ertüchtigt, ein derartiges Ansteigen des Luftdrucks zu detektieren und beispielsweise eine entsprechende Warn- oder Fehlermeldung für das Bedienpersonal der Turbine 5 zu erzeugen.

Im Zusammenhang mit der Erfindung wird bevorzugt der absolute Luftdruck der Kühlluft 9 oder dessen Änderung in mindestens einem Kühlluft-Sammelraum 11 ermittelt. Bezüglich der ersten Laufschaufelreihe wird der Luftdruck zwischen der zentralen Hohlwelle und der ersten Turbinenradscheibe gemessen; dementsprechend erfolgt die Messung des Luftdrucks für die zweite Laufschaufelreihe zwischen der ersten und der zweiten Turbinenradscheibe.

## Patentansprüche

1. Verfahren zur Überwachung des Kühlluftsystems (3) einer Turbine (5), wobei mindestens einer Schaufelreihe (7) der Turbine (5) Kühlluft (9) zugeführt wird,
**dadurch gekennzeichnet, dass**
ein Luftdruck in mindestens einem Kühlluft-Sammelraum (11) ermittelt wird, aus welchem die Kühlluft (9) entnommen und der Schaufelreihe (7) zugeführt wird.

2. Verfahren nach Anspruch 1,
**dadurch gekennzeichnet, dass**
der Kühlluft-Sammelraum (11) in einem Turbinengehäuse (15) der Turbine (5) angeordnet ist.

3. Verfahren nach einem der Ansprüche 1 oder 2,
**dadurch gekennzeichnet, dass**
der Kühlluft-Sammelraum (11) ringförmig um eine Turbinenachse (17) angeordnet ist.

4. Verfahren nach einem der Ansprüche 1 bis 3,
**dadurch gekennzeichnet,**
**dass** der Kühlluft-Sammelraum (11) mit verdichteter Luft aus einem Verdichter (19) gespeist wird und mit der Turbinenschaufelreihe (7) über einen Kühlluftkanal (21) direkt kommuniziert.

5. Verfahren nach einem der Ansprüche 1 bis 4,
**dadurch gekennzeichnet, dass**
der Luftdruck mittels mindestens eines Drucksensors (13) ermittelt wird.

6. Verfahren nach einem der Ansprüche 1 bis 5,
**dadurch gekennzeichnet, dass**
ein aktueller Wert des Luftdrucks drahtlos an eine Auswerteeinheit (23) übermittelt wird.

7. Verfahren nach einem der Ansprüche 1 bis 6,
**dadurch gekennzeichnet, dass**
auf Grund eines ansteigenden Luftdrucks auf eine Verstopfung mindestens einer von mindestens einer Turbinenschaufel umfassten Kühllufteintritts- oder/und -austrittsöffnung oder/und eines Turbinenschaufelkühlluftkanals oder/und des Kühlluftkanals (21) geschlossen wird.

8. Vorrichtung (1) zur Überwachung des Kühlluftsystems (3) einer Turbine (5), wobei mindestens einer Schaufelreihe (7) der Turbine (5) Kühlluft (9) zuführbar ist,
**gekennzeichnet durch**
mindestens einen, in einem Kühlluft-Sammelraum (11) angeordneten Drucksensor (13), wobei aus dem Kühlluft-Sammelraum (11) die Kühlluft (9) entnehmbar und der Schaufelreihe (7) zuführbar ist.

9. Vorrichtung (1) nach Anspruch 8,
**dadurch gekennzeichnet, dass**
der Kühlluft-Sammelraum (11) in einem Turbinengehäuse (15) der Turbine (5) angeordnet ist.

10. Vorrichtung (1) nach einem der Ansprüche 8 oder 9,
**dadurch gekennzeichnet, dass**
der Kühlluft-Sammelraum (11) ringförmig um eine Turbinenachse (17) angeordnet ist.

11. Vorrichtung (1) nach einem Ansprüche 8 bis 10,
**gekennzeichnet durch**
einen Verdichter (19) zur Speisung des Kühlluft-Sammelraums (11) mit verdichteter Luft, wobei der Kühlluft-Sammelraum (11) über einen Kühlluftkanal (21) direkt mit der Turbinenschaufelreihe (7) kommuniziert.

12. Vorrichtung (1) nach einem der Ansprüche 8 bis 11,
**dadurch gekennzeichnet, dass**
der Drucksensor (13) zur drahtlosen Übertragung eines aktuellen Luftdrucks an eine Auswerteeinheit (23) ertüchtigt ist.
